# EUROPEAN PATENT SPECIFICATION

(11) **EP 0 982 515 B1**
(45) Date of publication and mention of the grant of the patent: **08.10.2003**
(21) Application number: 99306578.8
(22) Date of filing: 20.08.1999
(51) Int. Cl.: F16G 3/04

(54) **Silent chain having links with sheared apertures and vanadium carbide coated pins**
Zahnkette mit Scherbolzenlöcher aufweisenden Laschen und mit Vanadiumcarbid beschichteten Bolzen
Chaîne à dents munie de maillons avec ouvertures de cisaillement et d'axes revêtus de carbure de vanadium

(30) Priority: 21.08.1998 JP 25192698
(43) Date of publication of application: 01.03.2000
(73) Proprietor: BorgWarner Morse TEC Japan K.K., Nabari City Mie-Prefecture 518-0495 (JP); Honda Gijutu Kenkyusho KK, Haga-gun, Tochigi 321-3393 (JP)
(72) Inventor: Nakamura, Kenza, Honda Gijutsu Kenkyusho KK, Wako-shi, Saitama-ken (JP); Kawashima, Fuminori, Honda Gijutsu Kenkyusho KK, Wako-shi, Saitama-ken (JP); Fujiwara, Akira, Honda Gijutsu Kenkyusho KK, Wako-shi, Saitama-ken (JP); Yakubo, Kazushige, Honda Gijutsu Kenkyusho KK, Wako-shi, Saitama-ken (JP); Tada, Naosumi, 137 Minami, 5 Bancho Tsutsujigaoka, Mie Prefecture (JP); Yoshida, Yukio, Nabari Mie (JP)
(74) Representative: Lerwill, John

(56) References cited:
- GB-A- 2 320 214
- US-A- 4 915 675

## Description

The present invention relates to a power transmission chain with improved abrasion or wear resistance. In particular, it relates to a type of power transmission chain referred to as a silent chain with a large number of interleaved links. The links are interleaved in rows or sets and are connected by connecting pins.

Typically, a silent chain includes multiple links or link plates each carrying a pair of teeth and a pair of pinholes or apertures and is used as power transmission chain for automobiles, motorcycles, and other vehicles. The links are interleaved in rows or sets and connected by connecting pins, which are inserted in the apertures. Each tooth includes an inside flank and an outside flank which are joined at the crotch. Additionally, silent chains are typically provided with guide links on the outermost sides of the chain. The teeth of the link plates engage the teeth of a sprocket for power transmission from a driving sprocket to a driven sprocket.

During operation of the silent chain, the link plates are wound on and unwound from the chain sprocket. The connecting pins rotate in the apertures in the link plates. As a result, the outer surface of the connecting pins slide against the inner surface of the apertures, causing abrasion of the two surfaces. The abrasion must be kept within in a certain range, especially for the silent chain used for engine timing, since the abrasion and wear may result in extension of the length of the entire silent chain.

When a tensile load is applied to a silent chain, the load is distributed over each link plate. In the conventional silent chain, however, the rigidity of the guide link located at the outermost side is higher than the rigidity of the link plates, which will cause deformation of the connecting pin and the link plate under a tensile load. As a result, the central link plate and the outer link plate in the axial direction of the connecting pin will have different load distributions. The unevenly distributed loading will cause local abrasion of the link plate and connecting pin.

In consideration of the situation described above, the purpose of the present invention is to provide a silent chain with improved abrasion resistance, by minimizing local abrasion on the aperture and the connecting pin.

According to the conventional silent chain each of multiple interlaced inside links carries a pair of teeth and apertures. The links are connected by connecting pins inserted into the apertures and equipped with guide links on the outermost sides of the chain said guide links being press fit on the outside of said pins in alternate rows of said interlaced inside links. According to the present invention the silent chain is characterized by the fact that the profile irregularity of the aperture on each link plate and the connecting pin is 0.5 µm or less. In other words, the aperture or the curved portion of the aperture upon which the pin bears does not deviate in roundness as compared to an ideal circle more than 0.5 µm. The length of the sheared surface common between the pin and the aperture is 90% or more of the axial length of the aperture. The axial length of the aperture is the same as the link thickness. A hardened vanadium carbide layer with a thickness of 20 µm or higher is formed on the connecting pin.

The profile irregularity of the aperture on the link plate and the connecting pin should be 0.5 µm or less to reduce the surface pressure on the sliding surface between the aperture and the connecting pin. The link plate with this level of profile irregularity for the aperture can be manufactured by fine blanking as well as by other technologies.

Moreover, the profile irregularity of 0.5 µm or lower for the aperture on the link plate and the connecting pin can be tested through a chain abrasion test using the profile irregularity as a parameter. As described below, when the profile irregularity is 0.5 µm or lower, the chain length after the chain abrasion test does not exceed the maximum allowable limit for the abrasion extension.

The length of the sheared surface of the aperture should be 90% or more of the axial length of the aperture to increase the contact area between the aperture and the connecting pin and to reduce the surface pressure on the sliding surface between the aperture and the connecting pin. As a result, the abrasion or wear between the aperture and the connecting pin can be further decreased. The link plate with this level of sheared surface of the aperture can be manufactured by fine blanking as well as other technologies, such as shaving, etc. The requirement that the length of the sheared surface of the aperture should be 90% or more of the axial length of the aperture means that the bearing length or pin supporting length should be as long as possible in the axial direction or length of the aperture, the axial length corresponding to the link thickness.

In addition, a hardened vanadium carbide layer with a thickness of 20 µm or higher should be formed on the connecting pin to reduce abrasion of the connecting pin. The thickness of 20 µm or higher for the hardened layer corresponds to the 20 µm abrasion limit of the connecting pin calculated based on the maximum allowable limit of the abrasion extension of the silent chain.

In a first embodiment of the present invention, the outermost link plate is thicker than the remaining link plates in the inside link row or series. The inside or inner link row is the link row which does not include guide links as the outermost link plates. The rigidity of the thicker outermost inside link plates is higher than that of the remaining inside link plates. As a result, the deformation of the outermost inside link plates and the connecting pin can be reduced and the load can be evenly distributed on each link plate. The local abrasion on the aperture and the connecting pin can be reduced as well.

In addition, the central link plate should be thicker than the remaining link plates in the guide row or series, which is the row of links which includes guide links as the outermost link plates. As a result, the deformation of the connecting pin can be further reduced and the load can be more evenly distributed on each link plate. Therefore, local abrasion on the aperture and the connecting pin can be reduced.

In a second embodiment of the present invention, the thickness of the outermost link plate in the link row or series should be similar to that of the central link plate in the guide row. As a result, the deformation of the connecting pin can be further reduced and the load can be more evenly distributed on each link plate. Therefore, the local abrasion on the aperture and the connecting pin can be reduced.

According to the present invention, local abrasion on the aperture and the connecting pin can be reduced and the abrasion resistance of the silent chain can be improved.

In the following, this invention is explained in more detail with practical examples shown in the figures.

### BRIEF DESCRIPTION OF THE DRAWINGS

Figure 1 is a top view of a portion of a first embodiment of the silent chain of the present invention.
Figure 2 is a front view of the silent chain of FIG. 1.
Figure 3 shows a graph of the results obtained in the abrasion test of the silent chain using the profile irregularity of the aperture and the connecting pin as the parameter.
Figure 4 shows a graph of the relationship between the automobile running distance and the silent chain abrasion extension when the silent chain used connecting pins treated with a VC coating layer or without a VC coating layer.
Figure 5 shows a graph of the relationship between the automobile running distance and the silent chain abrasion extension when the silent chain used connecting pins treated with a VC coating layer shown in Figure 4 but the thickness of the VC coating layer was insufficient.
Figure 6 is a top view of a portion of a second embodiment of the silent chain of the present invention.
Figure 7 is a front view of the silent chain shown in Figure 6.
Figure 8 is a top view of a third embodiment of the silent chain of the present invention.
Figure 9 is a front view of the silent chain shown in Figure 8.
Figure 10 shows the chain extension versus the running distance regarding a comparison between the results obtained from the abrasion test of the silent chain of the third embodiment and the results obtained from the abrasion test of the silent chains of the first and second embodiments.

### DETAILED DESCRIPTION OF THE PREFERRED EMBODIMENTS

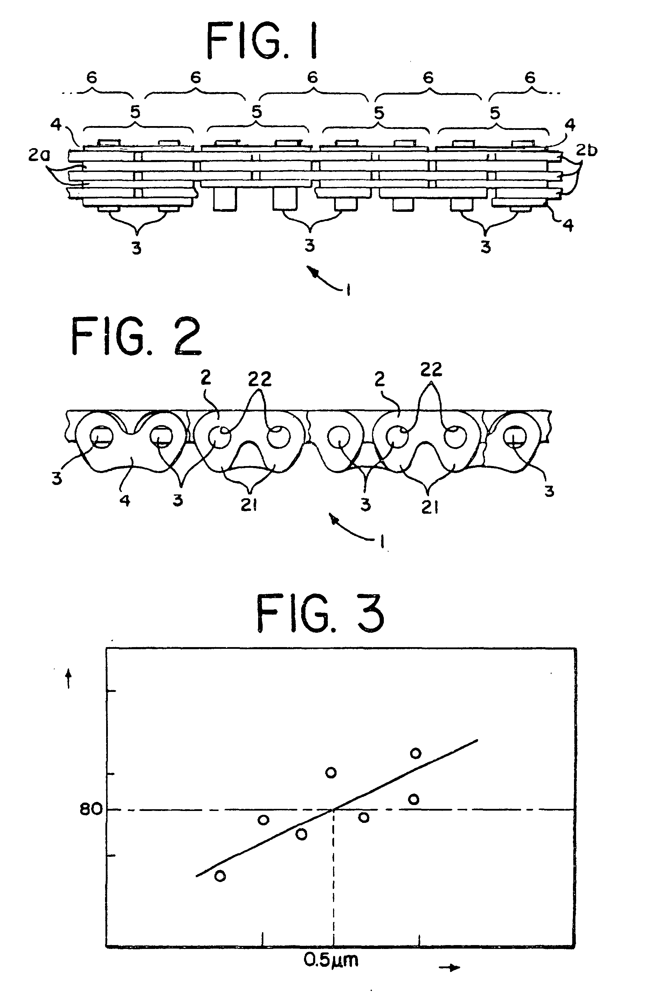

As shown in FIGS. 1 and 2, silent chain 1 consists of link plates or inside links 2(2a and 2b) each of which carry a pair of teeth 21 and a pair of apertures 22. The inside links are placed in side-by-side relation in a thickness direction and interleaved in a pitch direction (right and left direction). A cylinder-like connecting pin 3 is inserted into each aperture or aperture 22 on link plates 2 to connect link plates 2 such that the links are free to rotate with respect to each other. There are guide links 4 on the outermost side of each row of link plates 2. Typically, the ends of the connecting pin is securely press fit to the apertures in the guide links.

Silent chain 1 is formed by guide row 5 consisting of guide link 4 and link plates 2a, which have the same pitch as guide link 4, and inside link row 6 consisting of link plates 2b, which have the same pitch as guide link 4. Therefore, guide row 5 consists of 4 links (two guide links and two inside links) and inside link row 6 consists of 3 inside links.

Link plate 2 is manufactured by fine blanking or other technologies that provide a sheared surface along at least a portion of the inside of the aperture. The profile irregularity of aperture 22 was controlled at 0.5 µm or lower and the length of the sheared surface of aperture 22 was controlled at 90% or more of the axial length of the aperture. Moreover, connecting pin 3 was treated with a vanadium carbide (VC) coating treatment and the thickness of the hardened VC layer was controlled to be at least 20 µm or thicker. After the VC coating treatment, the connecting pin was further treated with heat treatment and polished. The profile irregularity of connecting pin 3 was controlled to be 0.5 µm or lower.

The conventional silent chain typically has a profile irregularity of 2 - 3 µm for the aperture and 0.5 - 1 µm for the connecting pin. When processed with the shaving treatment, the length of the sheared surface of the aperture is about 70 - 80% of the axial length of the aperture. The connecting pin is typically treated with a hardening treatment, such as carburization, etc.

In the present invention, the profile irregularity of aperture 22 and connecting pin 3 is controlled in the range of 0.5 µm or lower, for the following reasons. In other words, the aperture or the curved portion of the aperture upon which the pin bears does not deviate in roundness as compared to an ideal circle more than 0.5 µm. As shown in Figure 3, when a silent chain was tested through a chain abrasion test using the profile irregularity of connecting pin 3 and aperture 22 as a parameter, the higher the profile irregularity, the larger the chain abrasion extension. When the profile irregularity was 0.5 µm, the chain abrasion extension reached the allowable limit δ₀. Therefore, the profile irregularity of connecting pin 3 and aperture 22 should be controlled in the range of 0.5 µm or lower. For the silent chain used for engine timing in automobiles, the allowable limit δ₀ for the chain abrasion extension is usually a few tenth of one percentage with respect to the original length, to control the valve timing in a certain range without causing gear jump.

The length of the sheared surface of aperture 22 in the range of 90% or more of the axial length of the aperture means that the bearing length or pin supporting length should be as long as possible in the axial length of the aperture.

The thickness of 20 µm or higher for the hardened VC layer on connecting pin 3 corresponds to the 20 µm abrasion limit of connecting pin 3 calculated based on the allowable limit for the abrasion extension of the silent chain.

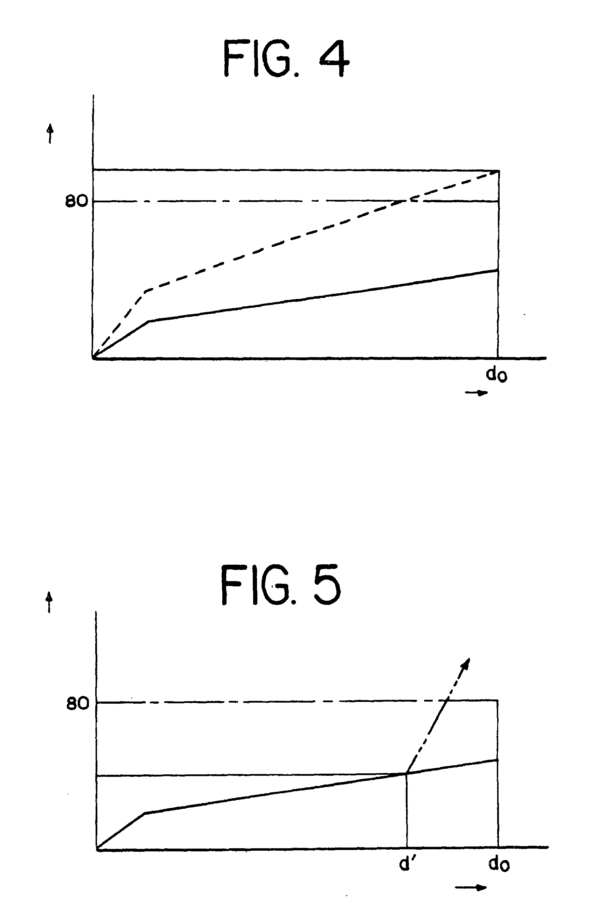

The solid line in Figure 4 shows the results obtained from a chain abrasion test for a silent chain using connecting pins coated with a hardened VC layer, while the dash line shows the results for a conventional silent chain using a connecting pin not coated with a hardened VC layer. In the figure, δ₀ on the ordinate represents the allowable limit for the abrasion extension of the silent chain and d₀ on the abscissa represents the possible running distance for the automobile guaranteed by the maker. By using a silent chain consisting of connecting pins treated with the VC coating layer, the chain extension did not reach the allowable limit δ₀ even when the automobile reached the guaranteed running distance d₀. On the other hand, the conventional silent chain reached the allowable limit δ₀ before the automobile reached the guaranteed running distance d₀.

The double dot-dash line in Figure 5 shows that when the hardened VC layer on the connecting pin treated with the VC coating treatment had insufficient thickness or the thickness of the hardened VC layer was only in the range of several µm to 10 µm, the pin abrasion increased dramatically after certain running distance d'. As a result, the abrasion extension of the silent chain reached allowable limit δ₀ before the automobile reached running distance d₀ guaranteed by the maker.

According to this embodiment, by controlling the profile irregularity of aperture 22 on link plate 2 and connecting pin 3 in the range of 0.5 µm or lower, the surface pressure on the sliding surface between aperture 22 and connecting pin 3 is reduced. Consequently, the abrasion between aperture 22 and connecting pin 3 is reduced. Moreover, by forming a hardened vanadium carbide layer with a thickness of 20 µm or higher on connecting pin 3, the abrasion of connecting pin 3 is further reduced and the abrasion resistance of the silent chain is improved. Furthermore, by controlling the length of the sheared surface of aperture 22 in the range of 90% or more of the axial length of aperture 22, the surface pressure on the sliding surface between aperture 22 and connecting pin 3 is further reduced.
Consequently, the abrasion between aperture 22 and connecting pin 3 is further reduced.

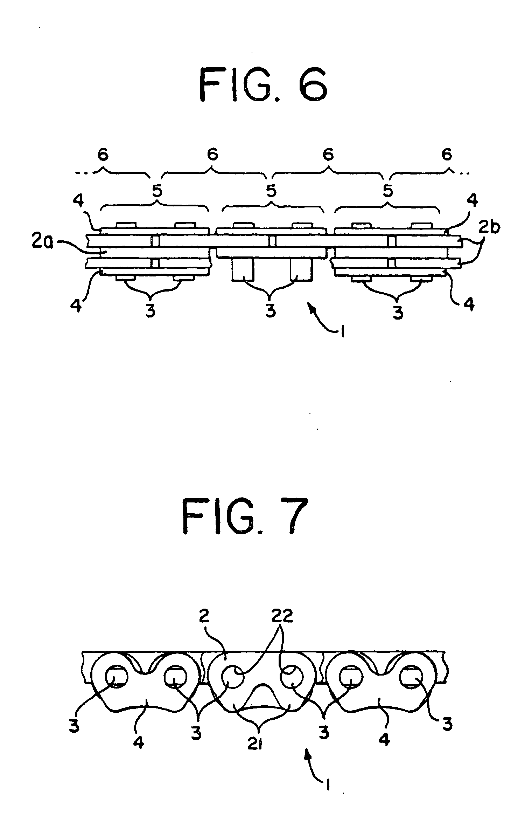

Figures 6 and 7 show a second embodiment of the silent chain of the present invention. Figure 6 is a top view of a portion of the silent chain. Figure 7 shows the front view of the silent chain. Elements of the present embodiment which are the same as in the first embodiment share the same reference characters.

The silent chain of the embodiment shown in FIGS. 6 and 7 has different structure from that shown in FIGS. 1 and 2. Guide row 5 consists of 3 links (one inside link and two guide links) and inside link row 6 consists of 2 inside links. The profile irregularity of aperture 22 and connecting pin 3, the length of the sheared surface of aperture 22, and the treatment of the connecting pin 3 with the hardened VC layer were controlled in the same ranges as in specified in the first embodiment. As a result, the abrasion of aperture 22 and connecting pin 3 was minimized and the abrasion resistance of the silent chain was improved.

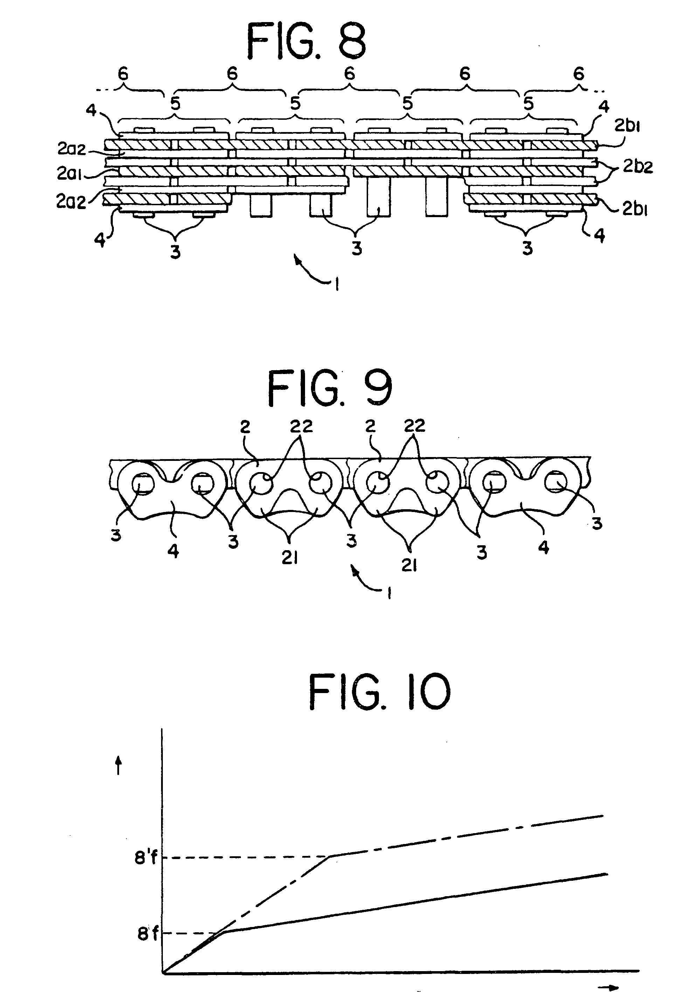

Figures 8 and 9 show the silent chain of a third embodiment of the present invention. Figure 8 is a top view of the silent chain. Figure 9 shows the front view of the silent chain. The symbols used in these figures are the same as in the figures of previous embodiments.

The silent chain in FIGS. 8 and 9 have a different structure from that of the first embodiment, as guide row 5 consists of 5 links (2 guide links and 3 inside links) and inside link row 6 consists of 4 inside links. As before, the profile irregularity of aperture 22 and connecting pin 3, the length of the sheared surface of aperture 22, and treatment of connecting pin 3 with the hardened VC layer were controlled in the same ranges as in previous embodiments. As a result, the abrasion of aperture 22 and connecting pin 3 was minimized and the abrasion resistance of the silent chain was improved. Furthermore, outermost inside link plates 2b₁ in inside link row 6 have a thickness of t₁, central link plate 2a₁ in guide row 5 have a thickness of t₁', and the remaining link plates 2b₂ in inside link row 6 and the remaining link plates 2a₂ in guide row 5 have a thickness of t₂. Thickness values t₁, t₁' and t₂ are in the relationship of t₁ = t₁' > t2. For example, t₁ = t₁' = 1.2 (mm) and t₂ = 1.0 (mm).

In other words, the rigidity of the outermost inside link plates 2b₁ in inside link row 6 and the rigidity of central link plate 2a₁ in guide row 5, are higher than those of remaining inside link plates 2a₂ and 2b₂. As a result, the deformation of connecting pin 3 under a tensile load is reduced and the tensile load is evenly distributed on each link plate 2. Therefore, local abrasion on aperture 22 and connecting pin 3 was reduced. Moreover, thickness values t₁ and t₁' should be close to each other, but it is not necessary for them to be the same.

Figure 10 shows a comparison between the results obtained from the abrasion test of the silent chains shown in Figures 1 and 6 and the results obtained in the abrasion test of the silent are chain shown in Figure 8. In Figure 10, the single dot-dash line represents the results obtained from the abrasion test of the silent chain shown in Figures 1 and 6, while the solid line represents the results obtained in the abrasion test of the silent chain are shown in Figure 8. When higher thickness values were used for the outermost inside link plates in the link row and the central link plate in the guide row in the silent chain shown in Figure 8, the initial abrasion extension δ_{f} of the silent chain, appearing after a short running distance, was much lower compared to the initial abrasion extension δ_{f}' of the silent chain, with all the link plates having the same thickness, as shown in Figures 1 and 6. By using the silent chain with the structure shown in Figure 8, the abrasion extension of the silent chain will be much lower when the automobile reaches the guaranteed running distance.

By using the silent chain of the present invention, which has a profile irregularity of the aperture and the connecting pin in the range of 0.5 µm or lower, a length of the sheared surface of the aperture in the range of 90% or more of the axial length of the aperture, and a hardened vanadium carbide layer with a thickness of 20 µm or higher formed on the connecting pin, the abrasion of the aperture and the connecting pin can be minimized and the abrasion resistance of the silent chain can be significantly improved.

The experimental results shown in Figures 3, 4, 5 and 10 are intended to be examples of performance of one or more samples of the disclosed chain. The results are not intended to represent all data obtained from testing of the disclosed chains or results necessarily obtained by the disclosed chains.

## Claims

1. A silent chain comprising:
a plurality of interlaced inside links (2), said inside links each having a pair of teeth (21) and a pair of apertures (22), said inside links being interconnected by pins (3) inserted in said apertures;
a plurality of guide links (4), said guide links having a pair of apertures and being press fit on the outside of said pins (3) in alternate rows of said interlaced inside links (2);
said apertures (22) of said inside links (2) being generally round, a deviation of said apertures from said roundness being less than 0.5 µm,
the pin supporting length of said apertures (22) having a sheared surface being greater than 90% of the axial length of said aperture (22),
said pins (3) having an outer layer of hardened vanadium carbide, said layer being at least 20 µm thick.

2. The silent chain described in claim 1, wherein a pair of outermost inside link plates (2) located on the outside of said inside link plates are thicker than the remaining inside link plates in said inside link rows and a central link plate is thicker than the remaining said inside link plates in said guide row (5).

3. The silent chain described in claim 2, wherein said thickness of said outermost link plates in said inside link rows is about the same thickness as that of said central link plate in said guide row (5).

## Patentansprüche

1. Geräuschlose Kette, die Folgendes umfasst:
eine Mehrzahl von ineinandergreifenden Innengliedern (2), wobei jedes der genannten Innenglieder ein Paar Zähne (21) und ein Paar Löcher (22) aufweist, wobei die genannten Innenglieder durch in die genannten Löcher eingesteckte Stifte (3) miteinander verbunden sind;
eine Mehrzahl von Führungsgliedern (4), wobei die genannten Führungsglieder ein Paar Löcher aufweisen und in abwechselnden Reihen der genannten ineinandergreifenden Innenglieder (2) auf die Außenseite der genannten Stifte (3) aufgepresst werden,
wobei die genannten Löcher (22) der genannten Innenglieder (2) allgemein rund sind, wobei eine Abweichung der genannten Löcher von der genannten Rundheit weniger als 0,5 µm beträgt,
wobei die genannten Löcher (22) über ihre Stiftstützlänge eine Scherfläche haben, die mehr als 90% der axialen Länge des genannten Lochs (22) ausmacht,
wobei die genannten Stifte (3) eine Außenschicht aus gehärtetem Vanadiumcarbid aufweisen, wobei die genannte Schicht eine Dicke von wenigstens 20 µm hat.

2. Geräuschlose Kette nach Anspruch 1, bei der ein Paar äußerste Innenlaschen (2), die sich auf der Außenseite der genannten Innenlaschen befinden, dicker sind als die übrigen Innenlaschen in den genannten inneren Gliedreihen, und eine mittlere Lasche dicker ist als die übrigen genannten Innenlaschen in der genannten Führungsreihe (5).

3. Geräuschlose Kette nach Anspruch 2, bei der die genannte Dicke der genannten äußersten Laschen in den genannten inneren Gliedreihen etwa dieselbe Dicke hat wie die genannte mittlere Lasche in der genannten Führungsreihe (5).

## Revendications

1. Une chaîne silencieuse comprenant :
une pluralité de maillons intérieurs (2) entrelacés, lesdits maillons intérieurs ayant chacun une paire de dents (21) et une paire d'ouvertures (22), lesdits maillons intérieurs étant interconnectés par des broches (3) introduites dans lesdites ouvertures ;
une pluralité de maillons de guidage (4), lesdits maillons de guidage ayant une paire d'ouvertures et étant adaptés par ajustage serré sur l'extérieur desdites broches (3) dans toutes les deuxièmes rangées desdits maillons intérieurs (2) entrelacés ;
lesdites ouvertures (22) desdits maillons intérieurs (2) étant généralement rondes, toute ovalisation desdites ouvertures étant inférieure à 0,5 µm ;
la longueur de support de broche desdites ouvertures (22) ayant une surface cisaillée dont la grandeur dépasse 90% de la longueur axiale de ladite ouverture (22),
lesdites broches (3) ayant une couche extérieure de carbure de vanadium trempé, ladite couche ayant une épaisseur minimum de 20 µm.

2. La chaîne silencieuse selon la revendication 1, dans laquelle une paire de plaques (2) de maillons intérieurs qui sont les plus à l'extérieur, placées sur l'extérieur desdites plaques de maillons intérieurs, sont plus épaisses que le reste des plaques de maillons intérieurs dans lesdites rangées de maillons intérieurs et une plaque de maillons centrale est plus épaisse que le reste desdites autres plaques de maillons intérieurs dans ladite rangée de guidage (5).

3. La chaîne silencieuse selon la revendication 2, dans laquelle ladite épaisseur desdites plaques de maillons les plus extérieures dans lesdites rangées de maillons intérieurs est approximativement égale à l'épaisseur de ladite plaque de maillons centrale dans ladite rangée de guidage (5).
